# EUROPEAN PATENT SPECIFICATION

(11) **EP 2 557 817 B1**
(45) Date of publication and mention of the grant of the patent: **19.07.2017**
(21) Application number: 10851637.8
(22) Date of filing: 17.09.2010
(51) Int. Cl.: H04W 4/06, H04L 12/18, H04W 80/04, H04W 84/12, H04W 28/06, H04W 76/00

(54) **METHOD AND SYSTEM FOR TRANSMITTING WIRELESS MULTICAST DATA**
VERFAHREN UND SYSTEM ZUR ÜBERTRAGUNG VON DRAHTLOSEN MULTICAST-DATEN
PROCÉDÉ ET SYSTÈME PERMETTANT DE TRANSMETTRE DES DONNÉES DE MULTIDIFFUSION SANS FIL

(30) Priority: 20.05.2010 CN 201010179691
(43) Date of publication of application: 13.02.2013
(73) Proprietor: ZTE Corporation, Guangdong Province 518057 (CN)
(72) Inventor: GAO, Jianying, Shenzhen City, Guangdong Province 518057 (CN); PENG, Kai, Shenzhen City, Guangdong Province 518057 (CN)
(74) Representative: Zerbi, Guido Maria
(86) International application number: PCT/CN2010/077035
(87) International publication number: WO 2011/143880

(56) References cited:
- EP-A1- 2 129 037
- CN-A- 1 543 132
- CN-A- 1 933 460
- JP-A- 2007 049 382
- US-A1- 2002 143 951
- "PowerLine Telecommunications (PLT); Inhome PLT;PLT48_TD_12_WI_25_draft", ETSI DRAFT; PLT48_TD_12_WI_25_DRAFT, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. PLT, no. V1.1.1, 2 October 2008 (2008-10-02), pages 1-217, XP014097762, [retrieved on 2008-10-02]

## Description

### Technical Field

The present invention relates to the wireless communication technology field, and more particularly, to a method and a system for transmitting wireless multicast data.

### Background of the Related Art

With the rapid development of the internet, IPv4 addresses in the TCP/IP (Transmission Control Protocol/Internet Protocol) protocol which is widely used in the existing Internet cannot provide sufficient address space resources for the network. Therefore, the research of the next generation internet protocol IPv6 emerges as the times require. The network protocol based on IPv6 is gradually applied to the Internet, and the IPv4 gradually evolves to the IPv6 as well. In an IPv6 network environment, services based on the multicast are widely used, such as live broadcast services of an IPTV (Internet Protocol Television) system, network remote education systems, network video live broadcast, and so on. Wireless Local Area Networks (called as WLAN for short) develop rapidly in recent years, and in the IEEE (Institute of Electrical and Electronics Engineers) 802.11 network, the technologies of transmitting data, voice and video signals by the wireless technology have already been used widely.

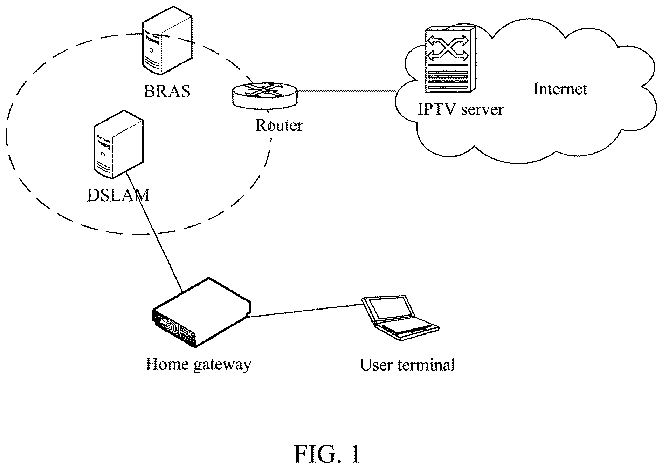

A system architecture in which a HGW (Home Gateway) develops wireless multicast applications is shown in FIG. 1, and the system structure mainly comprises the following network elements/devices.

The HGW: can access the network at the WAN (Wide Area Network) side by taking advantage of a broadband access technology, such as access ways of xDSL (Digital Subscriber Line), xPON (Passive Optical Network), 3G (3^{rd} Generation mobile communication technology), and so on, thus it realizes that wireless users access the Internet. The HGW can provide users at the LAN (Local Area Network) side with services of the internet accessing, IPTV video broadcasting, and voice, and so on, which are based on the IPv6.

Wherein, the LAN side supports access of wired users and WLAN users. There are an access server and a streaming media server at the WAN side. A user terminal might be a computer (such as a notebook), or a STB (Set Top Box) and a TV set, and so on.

As shown in FIG. 1, taking the uplink mode of the HGW being an xDSL access for example, the access server comprises: a DSLAM (Digital Subscriber Line Access Multiplexer) and a BRAS (Broadband Remote Access Server), which is used for the HGW to access an Ethernet. The interaction is performed with an IPTV media server (one kind of the streaming media server) of the Internet through a router, so as to acquire the multicast service data provided by the IPTV.

At present, in the wireless transmission medium, the transmission quality of the IPv6 multicast data is poorer, and the user experience needs to be improved; however, how to enhance the transmission quality of the wireless IPv6 multicast data effectively, is also a problem to be solved urgently in the related art.

Therefore, it is necessary to provide a solution, which can effectively transmit wireless IPv6 multicast data regarding to the wireless users in the IPv6 network environment, so as to improve the transmission quality of the existing wireless IPv6 multicast data.

A method for transmitting multicast data is also known from JP2007049382A (SUMITOMO ELECTRIC INDUSTRIES) 22 February 2007; Relevant technologies are also known from US2002/143951A1 (KHAN SHAHADATULLA[CA] ET AL) 3 October 2002 and from "PowerLine Telecommunications (PLT); Inhome PLT; PLT48_TD_12_WI_25_draft", ETSI DRAFT; PLT48_TD_12_WI_25_DRAFT, EUROPEAN TELECOMMUNICATIONS STANDARDS INSTITUTE (ETSI), 650, ROUTE DES LUCIOLES; F-06921 SOPHIA-ANTIPOLIS; FRANCE, vol. PLT, no.V1.1.1, 2 October 2008, pages 1-217, XP014097762.

### Summary of the Invention

The technical problem to be solved by the present invention is to provide a method and a system for transmitting wireless multicast data, so as to improve the transmission quality of the existing wireless IPv6 multicast data.

The features of the method and the system according to the present invention are defined in the independent claims.

Also provided is a method for transmitting wireless multicast data, and the method comprises:
after a home gateway (HGW) starts a multicast listener discovery (MLD) listening, if the HGW determines that an MLD Report message received from a port is transmitted by a wireless user, associating a source media access control (MAC) address in the MLD Report message with the port and a multicast IP address in the MLD Report message and recording into an MLD multicast forwarding table; and
after the HGW receives an IPv6 multicast data package from a streaming media, matching a destination IP address of the IPv6 multicast data package with the multicast IP address recorded in the MLD multicast forwarding table, and judging whether the port corresponding to the matched multicast IP address is a wireless port; and if the port is the wireless port, forwarding the IPv6 multicast data package to the wireless port after replacing the destination MAC address of the IPv6 multicast data package with an MAC address associated with the wireless port.

Wherein, the step of associating the source MAC address with the port and the multicast IP address and recording into the MLD multicast forwarding table comprises: recording the source MAC address into a member MAC table corresponding to the port in the MLD multicast forwarding table while the port and the multicast IP address acquired from the MLD Report message are recorded into the MLD multicast forwarding table;
the MAC address associated with the wireless port is: an MAC address recorded in the member MAC table corresponding to the wireless port.

Wherein, if there are a plurality of member MAC addresses in the member MAC table corresponding to the wireless port, then the step of the HGW forwarding the IPv6 multicast data package to the wireless port comprises: the HGW, after copying the IPv6 multicast data package to the corresponding number of copies and completing replacements of destination MAC addresses one by one, forwarding to the wireless port.

Wherein, a bridge connection used to support IPv6 multicast services is established on the HGW; and/or
the HGW supports the IPv6 multicast services by routing.

Wherein, the HGW judges whether the received MLD Report message is transmitted by the wireless user by the following way of:
the HGW judging whether the MLD Report message is from a (WLAN) port after receiving the MLD Report message, and if the MLD Report message is from the WLAN port, determining that the MLD Report message is transmitted by the wireless user.

Also provided is a system for transmitting wireless multicast data, which is applied to a HGW, and the system comprises:
a multicast listener discovery (MLD) listening module, which is configured to listen to an MLD Report message received from a port, judge whether the MLD Report message is transmitted by a wireless user, if the MLD Report message is transmitted by the wireless user, associate a source media access control (MAC) address in the MLD Report message with the port and a multicast IP address in the MLD Report message, and record into an MLD multicast forwarding table;
a multicast data forwarding module, which is configured to, after receiving an IPv6 multicast data package from a streaming media, match a destination IP address of the IPv6 multicast data package with the multicast IP address recorded in the MLD multicast forwarding table; to judge whether the port corresponding to the matched multicast IP address is a wireless port, and if the port is the wireless port, forward the IPv6 multicast data package to the wireless port after replacing the destination MAC address of the IPv6 multicast data package with an MAC address associated with the wireless port.

Wherein, the MLD listening module is further configured to associate the source MAC address with the port and the multicast IP address and record into the MLD multicast forwarding table by the following way of: recording the source MAC address into a member MAC table corresponding to the port in the MLD multicast forwarding table while the port and the multicast IP address acquired from the MLD Report message are recorded into the MLD multicast forwarding table;
the multicast data forwarding module is further configured to forward the IPv6 multicast data package to the wireless port after replacing the destination MAC address of the IPv6 multicast data package with the MAC address recorded in the member MAC table corresponding to the wireless port.

Wherein, the multicast data forwarding module is further configured to, if there are a plurality of member MAC addresses in the member MAC table corresponding to the wireless port, copy, by the HGW, the IPv6 multicast data package to the corresponding number of copies and complete replacements of destination MAC addresses one by one, and then forward to the wireless port.

Wherein, a bridge connection used to support IPv6 multicast services is established on the HGW; and/or
the HGW supports the IPv6 multicast services by routing.

Wherein, the MLD listening module is further configured to judge whether the received MLD Report message is transmitted by the wireless user by the following way of:
the HGW judging whether the MLD Report message is from a wireless local area network (WLAN) port after receiving the MLD Report message, and if the MLD Report message is from the WLAN port, determining that the MLD Report message is transmitted by the wireless user.

With the technical scheme of the present invention, the transmission quality of the IPv6 multicast packages in the wireless transmission media can be improved in the network environment supporting the IPv6 and when wireless multicast services are developed. For example, when the IPTV or network video broadcasting is applied, the video broadcasting can be smooth, and the transmission effect is improved significantly.

### Brief Description of Drawings

FIG. 1 is a schematic diagram of a system of wireless multicast applications in an IPv6 network environment; and
FIG. 2 is a flow chart of a method for transmitting IPv6 multicast data according to an embodiment of the present invention.

### Preferred Embodiments of the Present Invention

In order to solve the problem in the related art, the basic idea of the present invention is as follows: by listening to an MLD (Multicast Listener Discovery) Report message sent by a wireless user, recording an IPv6 multicast address added by that message and a MAC (Media Access Control) address of the wireless user into an MLD multicast forwarding table; when receiving an IPv6 data package whose destination IP address is the IPv6 multicast address, modifying a destination MAC address of the IPv6 data package (i.e., multicast address) to the MAC address of the wireless user (i.e., unicast address); and then transmitting the IPv6 data package to the wireless user by way of unicast.

Thus, the transmission rate of a wireless transmission media to the unicast data is higher than that to the multicast data, so, taking the wireless multicast data as the unicast data to be transmitted, can enhance the transmission quality without influencing the data content.

Based on the aforementioned idea, the present invention provides a method for transmitting wireless multicast data, and the method adopts the following technical scheme:
an HGW, after starting an MLD listening, listens to a MLD Report message received form a port, if the HGW determines that the MLD Report message is transmitted by a wireless user, the HGW associates a source MAC address in the MLD Report message with the port and a multicast IP address in the MLD Report message, and records them into an MLD multicast forwarding table;
after the HGW receives an IPv6 multicast data package from a streaming media, the HGW matches a destination IP address of the IPv6 multicast data package with the multicast IP address recorded in the MLD multicast forwarding table; if the destination IP address is matched with the multicast IP address, the HGW judges whether the port corresponding to the matched multicast IP address is a wireless port; and if the port is the wireless port, forwards the IPv6 multicast data package to the wireless port after replacing the destination MAC address of the IPv6 multicast data package with an MAC address associated with the wireless port.

Wherein, the associating the source MAC address with the port and the multicast IP address, and recording them into the MLD multicast forwarding table, specifically can comprise: recording the source MAC address into a member MAC table corresponding to the port in the MLD multicast forwarding table while the port and the multicast IP address acquired from the MLD Report message are recorded into the MLD multicast forwarding table;
the MAC address associated with the wireless port specifically is: an MAC address recorded in the member MAC table corresponding to the wireless port.

Furthermore, if there are a plurality of member MAC addresses in the member MAC table of the wireless port, then, the HGW, after copying the IPv6 multicast data package to the corresponding number of copies and completing replacements of destination MAC addresses one by one, forwards them to the wireless port.

Furthermore, a bridge connection, which is used to support IPv6 multicast services, is established on the HGW; and/or, the HGW supports the IPv6 multicast services by routing.

Furthermore, the HGW judges that the received MLD Report message is transmitted by the wireless user by the following way of:
the HGW judging whether that message is from a WLAN port after receiving the MLD Report message, and if yes, determining that the message is transmitted by the wireless user.

The implementation of the technical scheme of the present invention will be further described in detail in combination with the accompanying drawings and specific embodiments hereinafter.

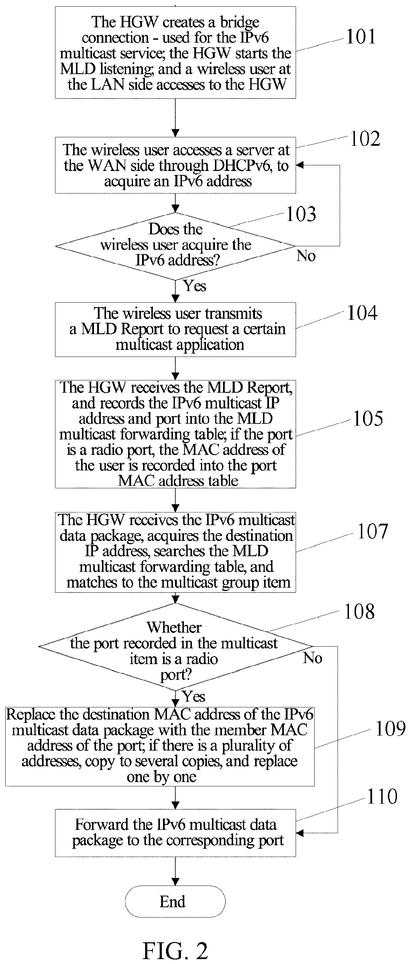

FIG. 2 shows a method for transmitting wireless multicast data according to an embodiment of the present invention, and as shown in FIG. 2, the process of the method of the present embodiment is described as follows.

In step 101, the HGW accesses the IPv6 network environment, and creates a bridge connection used for the IPv6 multicast services and providing IPTV applications, in addition, the HGW can also support the IPv6 multicast services by routing; the HGW starts the MLD message listening, and the wireless user accesses at the LAN side.

In step 102, the wireless user accesses the server at the WAN side by DHCPv6, to acquire an IPv6 global address.

In the IPv6 network environment, the user accessed at the LAN side of the HGW needs to acquire the global address by the DHCPv6 (Dynamic Host Configuration Protocol) or SLAAC (Stateless Address Auto Configuration), and uses the global address to access an IPTV server of the network at the WAN side.

In step 103, it is checked that whether the wireless user acquires the IPv6 global address, if yes, step 104 is performed, otherwise, it is returned to step 102 to acquire again.

In step 104, the wireless user transmits a MLD Report message to request an IPTV multicast application.

In step 105, the HGW records the multicast IPv6 address in the message and the port into the MLD multicast forwarding table after receiving the MLD Report message of the user from the port, if determining that the port is a WLAN port, records the MAC address of the user into the member MAC table corresponding to the wireless port, and forwards the MLD Report to the WAN side through the bridge connection.

In step 106, an access server at the WAN side (such as BRAS) forwards the data package of the corresponding multicast group sent by the IPTV server to the HGW after receiving the MLD Report message.

In step 107, after receiving the IPv6 multicast data package, the HGW acquires the destination IP address, searches a multicast item in the MLD multicast forwarding table, and matches the multicast IP address.

In step 108, it is judged whether the port recorded in the matched multicast item (i.e., the port corresponding to the multicast IP address) is a wireless port, if yes, step 109 is performed, otherwise, step 110 is performed.

In step 109, the destination MAC address of the IPv6 multicast data package is replaced with the member MAC address in the member MAC table of the WLAN port, if there are a plurality of member MAC addresses, the IPv6 multicast data package is copied to multiple copies, and the destination MAC addresses are replaced one by one.

In step 110, the IPv6 multicast data package is forwarded to the corresponding WLAN port, and the process ends.

The embodiment of the present invention also provides a system for transmitting wireless multicast data, which is applied to the HGW, and the system comprises:
a MLD listening module, which is configured to listen to an MLD Report message received from a port, judge whether the MLD Report message is transmitted by a wireless user, if the MLD Report message is transmitted by the wireless user, associate a source MAC address in the MLD Report message with the port and a multicast IP address in the MLD Report message, and record into an MLD multicast forwarding table;
a multicast data forwarding module, which is configured to, after receiving an IPv6 multicast data package from a streaming media, match a destination IP address of the IPv6 multicast data package with the multicast IP address recorded in the MLD multicast forwarding table; to judge whether the port corresponding to the matched multicast IP address is a wireless port, and if the port is the wireless port, forward the IPv6 multicast data package to the wireless port after replacing the destination MAC address of the IPv6 multicast data package with an MAC address associated with the wireless port.

Wherein, the MLD listening module is further configured to associate the source MAC address with the port and the multicast IP address and record into the MLD multicast forwarding table by the following way of: recording the source MAC address into a member MAC table corresponding to the port in the MLD multicast forwarding table while the port and the multicast IP address acquired from the MLD Report message are recorded into the MLD multicast forwarding table;
the multicast data forwarding module is further configured to forward the IPv6 multicast data package to the wireless port after replacing the destination MAC address of the IPv6 multicast data package with the MAC address recorded in the member MAC table corresponding to the wireless port.

Wherein, the multicast data forwarding module is further configured to, if there are a plurality of member MAC addresses in the member MAC table corresponding to the wireless port, copy, by the HGW, the IPv6 multicast data package to the corresponding number of copies and complete replacements of destination MAC addresses one by one, and then forward to the wireless port.

Wherein, a bridge connection used to support IPv6 multicast services is established on the HGW; and/or
the HGW supports the IPv6 multicast services by routing.

Wherein, the MLD listening module is further configured to judge whether the received MLD Report message is transmitted by the wireless user by the following way of:
the HGW judging whether the MLD Report message is from a WLAN port after receiving the message, if yes, determining that the message is transmitted by the wireless user.

The above description is only the preferred embodiments of the present invention, and is not intended to limit the present invention. The scope of the invention is to be determined by the appended claims.

### Industrial Applicability

With the technical scheme of the present invention, the transmission quality of the IPv6 multicast packages in the wireless transmission media can be improved in the network environment supporting the IPv6 and when wireless multicast services are developed. For example, when the IPTV or network video broadcasting is applied, the video broadcasting can be smooth, and the transmission effect is improved significantly.

## Claims

1. A method for transmitting wireless multicast data, comprising:
after a home gateway, HGW starts a multicast listener discovery, MLD listening (101, 102, 103, 104), if the HGW determines that an MLD Report message received from a port is transmitted by a wireless user, associating a source media access control, MAC address in the MLD Report message with the port and a multicast internet protocol, IP address in the MLD Report message and recording into an MLD multicast forwarding table;
wherein, the step of if the HGW determines that an MLD Report message received from a port is transmitted by a wireless user, associating the source MAC address with the port and the multicast IP address and recording into the MLD multicast forwarding table comprises: recording the port and the multicast IP address into the MLD multicast forwarding table; if determining that the port is a wireless port, recording the source MAC address into a member MAC table corresponding to the port in the MLD multicast forwarding table(105); and
the method further comprising:
after the HGW receives an internet protocol version 6, IPv6 multicast data package from a streaming media, matching a destination IP address of the IPv6 multicast data package with the multicast IP address recorded in the MLD multicast forwarding table (106, 107), and judging whether the port corresponding to the matched multicast IP address is a wireless port (108); if the port corresponding to the matched multicast IP address is the wireless port, replacing the destination MAC address of the IPv6 multicast data package with a member MAC address in the member MAC table corresponding to the wireless port, if there are a plurality of member MAC addresses in the member MAC table corresponding to the wireless port, the IPv6 multicast data package being copied to multiple copies, and the destination MAC addresses being replaced one by one (109), and forwarding the IPv6 multicast data package to the wireless port (110); and if the port corresponding to the matched multicast IP address is not the wireless port, forwarding the IPv6 multicast data package to the corresponding port (110).

2. The method as claimed in claim 1, wherein,
if there are a plurality of member MAC addresses in the member MAC table corresponding to the wireless port, then the step of the HGW forwarding the IPv6 multicast data package to the wireless port comprises: the HGW, after copying the IPv6 multicast data package to the corresponding number of copies and completing replacements of destination MAC addresses one by one, forwarding to the wireless port.

3. The method as claimed in claim 1 or 2, wherein,
a bridge connection used to support IPv6 multicast services is established on the HGW; and/or
the HGW supports the IPv6 multicast services by routing (101).

4. The method as claimed in claim 1, wherein,
the HGW judges whether the received MLD Report message is transmitted by the wireless user by the following way of:
the HGW judging whether the MLD Report message is from a wireless local area network (WLAN) port after receiving the MLD Report message, and if the MLD Report message is from the WLAN port, determining that the MLD Report message is transmitted by the wireless user.

5. A system for transmitting wireless multicast data, applied to a home gateway, HGW, and comprising:
a multicast listener discovery, MLD listening module, which is configured to listen to an MLD Report message received from a port, judge whether the MLD Report message is transmitted by a wireless user, if the MLD Report message is transmitted by the wireless user, associate a source media access control, MAC address in the MLD Report message with the port and a multicast internet protocol, IP address in the MLD Report message, and record into an MLD multicast forwarding table;
wherein, the MLD listening module is further configured to judge whether the MLD Report message is transmitted by a wireless user, if the MLD Report message is transmitted by the wireless user, associate the source MAC address with the port and the multicast IP address and record into the MLD multicast forwarding table by the following way of: recording the port and the multicast IP address into the MLD multicast forwarding table; if determining that the port is a wireless port, recording the source MAC address into a member MAC table corresponding to the port in the MLD multicast forwarding table;
the system further comprises:
a multicast data forwarding module, which is configured to, after receiving an internet protocol version 6, IPv6 multicast data package from a streaming media, match a destination IP address of the IPv6 multicast data package with the multicast IP address recorded in the MLD multicast forwarding table; and judge whether the port corresponding to the matched multicast IP address is a wireless port, if the port corresponding to the matched multicast IP address is the wireless port, replace the destination MAC address of the IPv6 multicast data package with a member MAC address in the member MAC table corresponding to the wireless port, if there are a plurality of member MAC addresses in the member MAC table corresponding to the wireless port, the IPv6 multicast data package is copied to multiple copies, and the destination MAC addresses are replaced one by one, and forward the IPv6 multicast data package to the wireless port; and if the port corresponding to the matched multicast IP address is not the wireless port, forward the IPv6 multicast data package to the corresponding port.

6. The system as claimed in claim 5, wherein,
the multicast data forwarding module is further configured to, if there are a plurality of member MAC addresses in the member MAC table corresponding to the wireless port, copy, by the HGW, the IPv6 multicast data package to the corresponding number of copies and complete replacements of destination MAC addresses one by one, and then forward to the wireless port.

7. The system as claimed in claim 5 or 6, wherein,
a bridge connection used to support IPv6 multicast services is established on the HGW; and/or
the HGW supports the IPv6 multicast services by routing.

8. The system as claimed in claim 5 or 6, wherein,
the MLD listening module is further configured to judge whether the received MLD Report message is transmitted by the wireless user by the following way of:
the HGW judging whether the MLD Report message is from a wireless local area network (WLAN) port after receiving the MLD Report message, and if the MLD Report message is from the WLAN port, determining that the MLD Report message is transmitted by the wireless user.

## Patentansprüche

1. Ein Verfahren zum Übertragen von drahtlosen Multicast-Daten, das Folgendes beinhaltet:
nachdem ein Residential Gateway, HGW, ein Multicast-Listener-Discovery(MLD)-Hören (101, 102, 103, 104) startet, wenn das HGW bestimmt, dass eine MLD-Berichtsmeldung, die von einem Port empfangen wird, von einem drahtlosen Benutzer übertragen wird, Assoziieren einer SMAC-Adresse (Source Media Access Control-Adresse) in der MLD-Berichtsmeldung mit dem Port und einer Multicast-Internetprotokoll(IP)-Adresse in der MLD-Berichtsmeldung und Aufzeichnen in einer MLD-Multicast-Weiterleitungstabelle;
wobei der Schritt des Bestimmens durch das HGW, ob eine von einem Port empfangene MLD-Berichtsmeldung von einem drahtlosen Benutzer übertragen wird,
des Assoziierens der SMAC-Adresse mit dem Port und der Multicast-IP-Adresse und
des Aufzeichnens in der MLD-Multicast-Weiterleitungstabelle Folgendes beinhaltet:
Aufzeichnen des Ports und der Multicast-IP-Adresse in der MLD-Multicast-Weiterleitungstabelle; wenn bestimmt wird, dass der Port ein drahtloser Port ist,
Aufzeichnen der SMAC-Adresse in einer Mitglieder-MAC-Tabelle, die dem Port in der MLD-Multicast-Weiterleitungstabelle (105) entspricht; und
wobei das Verfahren ferner Folgendes beinhaltet:
nachdem das HGW ein Multicast-Datenpaket von Internetprotokoll Version 6, IPv6, von einem Streaming-Medium empfangen hat, Übereinstimmen einer Ziel-IP-Adresse des IPv6-Multicast-Datenpakets mit der in der MLD-Multicast-Weiterleitungstabelle (106, 107) aufgezeichneten Multicast-IP-Adresse und Beurteilen, ob der Port, welcher der übereinstimmenden Multicast-IP-Adresse entspricht, ein drahtloser Port (108) ist; wenn der Port, welcher der übereinstimmenden Multicast-IP-Adresse entspricht, der drahtlose Port ist, Ersetzen der Ziel-MAC-Adresse des IPv6-Multicast-Datenpakets mit einer Mitglieder-MAC-Adresse in der Mitglieder-MAC-Tabelle, die dem drahtlosen Port entspricht, wenn eine Vielzahl von Mitglieder-MAC-Adressen in der Mitglieder-MAC-Tabelle, die dem drahtlosen Port entspricht, vorhanden ist, wobei das IPv6-Multicast-Datenpaket auf mehrere Kopien kopiert wird und die Ziel-MAC-Adressen eine nach der anderen ersetzt werden (109), und Weiterleiten des IPv6-Multicast-Datenpakets an den drahtlosen Port (110); und wenn der Port, der der übereinstimmenden Multicast-IP-Adresse entspricht, nicht der drahtlose Port ist, Weiterleiten des IPv6-Multicast-Datenpakets an den entsprechenden Port (110).

2. Verfahren gemäß Anspruch 1, wobei,
wenn eine Vielzahl von Mitglieder-MAC-Adressen in der dem drahtlosen Port entsprechenden Mitglieder-MAC-Tabelle vorhanden ist, dann beinhaltet der Schritt des Weiterleitens des IPv6-Multicast-Datenpakets an den drahtlosen Port durch das HWG Folgendes: das HGW leitet nach dem Kopieren des IPv6-Multicast-Datenpakets in die entsprechende Anzahl von Kopien und dem Beenden des Ersetzens von Ziel-MAC-Adressen einer nach der anderen, an den drahtlosen Port weiter.

3. Verfahren gemäß Anspruch 1 oder 2, wobei
eine Brückenverbindung, die zur Unterstützung von IPv6-Multicast-Diensten verwendet wird, auf dem HGW eingerichtet wird; und/oder
das HGW die IPv6-Multicast-Dienste durch Routing (101) unterstützt.

4. Verfahren gemäß Anspruch 1, wobei
das HGW beurteilt, ob die empfangene MLD-Berichtsmeldung von dem drahtlosen Benutzer auf folgende Weise übertragen wird:
das HGW beurteilt, ob die MLD-Berichtsmeldung von einem Port eines drahtlosen lokalen Netzwerks (WLAN) stammt, nach dem Empfangen der MLD-Berichtsmeldung, und wenn die MLD-Berichtsmeldung vom WLAN-Port stammt, Bestimmen, dass die MLD-Berichtsmeldung von dem drahtlosen Benutzer übertragen wird.

5. Ein System zum Übertragen von drahtlosen Multicastdaten, angewandt auf ein Residential Gateway, HGW, und das Folgendes beinhaltet:
ein Multicast-Listener-Discovery(MLD)-Hörmodul, das konfiguriert ist, um eine von einem Port empfangene MLD-Berichtsmeldung abzuhören, zu beurteilen, ob die MLD-Berichtsmeldung von einem drahtlosen Benutzer übertragen wird, wenn die MLD-Berichtsmeldung von dem drahtlosen Benutzer übertragen wird, eine SMAC-Adresse in der MLD-Berichtsmeldung mit dem Port und einer Multicast-Internetprotokoll(IP)-Adresse in der MLD-Berichtsmeldung zu assoziieren und in einer MLD-Multicast-Weiterleitungstabelle aufzuzeichnen;
wobei das MLD-Hörmodul ferner konfiguriert ist, um zu beurteilen, ob die MLD-Berichtsmeldung von einem drahtlosen Benutzer übertragen wird, wenn die MLD-Berichtsmeldung von dem drahtlosen Benutzer übertragen wird, die SMAC-Adresse mit dem Port und der Multicast-IP-Adresse zu assoziieren und den Datensatz in der MLD-Multicast-Weiterleitungstabelle auf folgende Weise aufzuzeichnen: Aufzeichnen des Ports und der Multicast-IP-Adresse in der MLD-Multicast-Weiterleitungstabelle; wenn bestimmt wird, dass der Port ein drahtloser Port ist, Aufzeichnen der SMAC-Adresse in einer Mitglieder-MAC-Tabelle, die dem Port in der MLD-Multicast-Weiterleitungstabelle entspricht;
wobei das System ferner Folgendes beinhaltet:
ein Multicast-Datenweiterleitungsmodul, das konfiguriert ist, um nach dem Empfangen eines Datenpakets von Internetprotokoll Version 6, IPv6, von einem Streaming-Medium, eine Ziel-IP-Adresse des IPv6-Multicast-Datenpakets mit der in der MLD-Multicast-Weiterleitungstabelle aufgezeichneten Multicast-IP-Adresse übereinzustimmen; und zu beurteilen, ob der Port, der der übereinstimmenden Multicast-IP-Adresse entspricht, ein drahtloser Port ist, wenn der Port, der der übereinstimmenden Multicast-IP-Adresse entspricht, der drahtlose Port ist, die Ziel-MAC-Adresse des IPv6-Multicast-Datenpakets mit einer Mitglieder-MAC-Adresse in der Mitglieder-MAC-Tabelle, die dem drahtlosen Port entspricht, zu ersetzen, wenn eine Vielzahl von Mitglieder-MAC-Adressen in der Mitglieder-MAC-Tabelle, die dem drahtlosen Port entspricht, vorhanden ist, wobei das IPv6-Multicast-Datenpaket auf mehrere Kopien kopiert wird und die Ziel-MAC-Adressen eine nach der anderen ersetzt werden, und das IPv6-Multicast-Datenpaket an den drahtlosen Port weiterzuleiten; und wenn der Port, der der übereinstimmenden Multicast-IP-Adresse entspricht, nicht der drahtlose Port ist, das IPv6-Multicast-Datenpaket an den entsprechenden Port weiterzuleiten.

6. System gemäß Anspruch 5, wobei
das Multicast-Datenweiterleitungsmodul ferner konfiguriert ist, um, wenn eine Vielzahl von Mitglieder-MAC-Adressen in der dem drahtlosen Port entsprechenden Mitglieder-MAC-Tabelle vorhanden ist, durch das HGW, das IPv6-Multicast-Datenpaket in die entsprechende Anzahl von Kopien zu kopieren und das Ersetzen von Ziel-MAC-Adressen einer nach der anderen zu beenden und dann an den drahtlosen Port weiterzuleiten.

7. System gemäß Anspruch 5 oder 6, wobei
eine Brückenverbindung, die zur Unterstützung von IPv6-Multicast-Diensten verwendet wird, auf dem HGW eingerichtet wird; und/oder
das HGW die IPv6-Multicast-Dienste durch Routing unterstützt.

8. System gemäß Anspruch 5 oder 6, wobei
das MLD-Hörmodul ferner konfiguriert ist, um zu beurteilen, ob die empfangene MLD-Berichtsmeldung von dem drahtlosen Benutzer auf folgende Weise übertragen wird:
das HGW beurteilt, ob die MLD-Berichtsmeldung von einem Port eines drahtlosen lokalen Netzwerks (WLAN) stammt, nach dem Empfangen der MLD-Berichtsmeldung,
und wenn die MLD-Berichtsmeldung vom WLAN-Port stammt, bestimmt, dass die MLD-Berichtsmeldung von dem drahtlosen Benutzer übertragen wird.

## Revendications

1. Une méthode pour transmettre des données multicast sans fil, comprenant :
après qu'une passerelle domestique, HGW, démarre une écoute MLD (« multicast listener discovery ») (101, 102, 103, 104), si la HGW détermine qu'un message de rapport MLD reçu d'un port est transmis par un utilisateur sans fil, l'association d'une adresse de contrôle d'accès au support, MAC, source dans le message de rapport MLD avec le port et une adresse de protocole internet, IP, multicast dans le message de rapport MLD et l'enregistrement dans une table de transfert multicast MLD ;
dans laquelle, l'étape consistant à associer, si la HGW détermine qu'un message de rapport MLD reçu d'un port est transmis par un utilisateur sans fil, l'adresse MAC source avec le port et l'adresse IP multicast et à enregistrer dans la table de transfert multicast MLD comprend : l'enregistrement du port et de l'adresse IP multicast dans la table de transfert multicast MLD ; s'il est déterminé que le port est un port sans fil,
l'enregistrement de l'adresse MAC source dans une table MAC d'élément correspondant au port dans la table de transfert multicast MLD (105) ; et
la méthode comprenant en outre :
après que la HGW reçoit un paquet de données multicast de protocole internet version 6, IPv6, d'une diffusion médias en flux continu, l'assortiment d'une adresse IP de destination du paquet de données multicast IPv6 avec l'adresse IP multicast enregistrée dans la table de transfert multicast MLD (106, 107), et l'évaluation afin de savoir si le port correspondant à l'adresse IP multicast assortie est un port sans fil (108) ; si le port correspondant à l'adresse IP multicast assortie est le port sans fil, le remplacement de l'adresse MAC de destination du paquet de données multicast IPv6 avec une adresse MAC d'élément dans la table MAC d'élément correspondant au port sans fil, s'il y a une pluralité d'adresses MAC d'élément dans la table MAC d'élément correspondant au port sans fil, la copie du paquet de données multicast IPv6 en copies multiples, et le remplacement des adresses MAC de destination une par une (109), et le transfert du paquet de données multicast IPv6 vers le port sans fil (110) ; et si le port correspondant à l'adresse IP multicast assortie n'est pas le port sans fil, le transfert du paquet de données multicast IPv6 vers le port correspondant (110).

2. La méthode telle que revendiquée dans la revendication 1, dans laquelle,
s'il y a une pluralité d'adresses MAC d'élément dans la table MAC d'élément correspondant au port sans fil, alors l'étape consistant en ce que la HGW transfère le paquet de données multicast IPv6 au port sans fil comprend : la HGW, après avoir copié le paquet de données multicast IPv6 en un nombre correspondant de copies et achevé les remplacements d'adresses MAC de destination une par une, le transfert vers le port ans fil.

3. La méthode telle que revendiquée dans la revendication 1 ou la revendication 2, dans laquelle,
une connexion en pont utilisée pour soutenir des services multicast IPv6 est établie sur la HGW ; et/ou
la HGW soutient les services multicast IPv6 par routage (101).

4. La méthode telle que revendiquée dans la revendication 1, dans laquelle,
la HGW évalue si le message de rapport MLD reçu est transmis par l'utilisateur sans fil par la façon suivante consistant en ce que :
la HGW évalue si le message de rapport MLD provient d'un port de réseau local sans fil (WLAN) après avoir reçu le message de rapport MLD, et si le message de rapport MLD provient du port WLAN, la détermination que le message de rapport MLD est transmis par l'utilisateur sans fil.

5. Un système pour transmettre des données multicast sans fil, appliqué sur une passerelle domestique, HGW, et comprenant :
un module d'écoute MLD (« mulicast listener discovery »), lequel est configuré pour écouter un message de rapport MLD reçu d'un port, évaluer si le message de rapport MLD est transmis par un utilisateur sans fil, si le message de rapport MLD est transmis par l'utilisateur sans fil, associer une adresse de contrôle d'accès au support, MAC,
source dans le message de rapport MLD avec le port et une adresse de protocole internet, IP, multicast dans le message de rapport MLD, et enregistrer dans une table de transfert multicast MLD ;
dans lequel, le module d'écoute MLD est en outre configuré pour évaluer si le message de rapport MLD est transmis par un utilisateur sans fil, si le message de rapport MLD est transmis par l'utilisateur sans fil, associer l'adresse MAC source avec le port et
l'adresse IP multicast et enregistrer dans la table de transfert multicast MLD par la façon suivante consistant à : enregistrer le port et l'adresse IP multicast dans la table de transfert multicast MLD ; s'il est déterminé que le port est un port sans fil, enregistrer l'adresse MAC source dans une table MAC d'élément correspondant au port dans la table de transfert multicast MLD ;
le système comprend en outre :
un module de transfert de données multicast, lequel est configuré, après avoir reçu un paquet de données multicast de protocole internet version 6, IPv6, d'une diffusion médias en flux continu, pour assortir une adresse IP de destination du paquet de données multicast IPv6 avec l'adresse IP multicast enregistrée dans la table de transfert multicast MLD ; et évaluer si le port correspondant à l'adresse IP multicast assortie est un port sans fil, si le port correspondant à l'adresse IP multicast assortie est le port sans fil, remplacer l'adresse MAC de destination du paquet de données multicast IPv6 avec une adresse MAC d'élément dans la table MAC d'élément correspondant au port sans fil, s'il y a une pluralité d'adresses MAC d'élément dans la table MAC d'élément correspondant au port sans fil, le paquet de données multicast IPv6 est copié en copies multiples, et les adresses MAC de destination sont remplacées une par une, et transférer le paquet de données multicast IPv6 vers le port sans fil ; et si le port correspondant à l'adresse IP multicast assortie n'est pas le port sans fil, transférer le paquet de données multicast IPv6 vers le port correspondant.

6. Le système tel que revendiqué dans la revendication 5, dans lequel,
le module de transfert de données multicast est en outre configuré, s'il y a une pluralité d'adresses MAC d'élément dans la table MAC d'élément correspondant au port sans fil, pour faire copier, par la HGW, le paquet de données multicast IPv6 en un nombre correspondant de copies et achever les remplacements d'adresses MAC de destination une par une, puis transférer vers le port sans fil.

7. Le système tel que revendiqué dans la revendication 5 ou la revendication 6, dans lequel,
une connexion en pont utilisée pour soutenir des services multicast IPv6 est établie sur la HGW ; et/ou
la HGW soutient les services multicast IPv6 par routage.

8. Le système tel que revendiqué dans la revendication 5 ou la revendication 6, dans lequel,
le module d'écoute MLD est en outre configuré pour évaluer si le message de rapport MLD reçu est transmis par l'utilisateur sans fil par la façon suivante consistant en ce que :
la HGW évalue si le message de rapport MLD provient d'un port de réseau local sans fil (WLAN) après avoir reçu le message de rapport MLD, et si le message de rapport MLD provient du port WLAN, la détermination que le message de rapport MLD est transmis par l'utilisateur sans fil.
